# EUROPEAN PATENT APPLICATION

(11) **EP 4 813 611 A1**
(43) Date of publication of application: **30.09.2026**
(21) Application number: 26164870.3
(22) Date of filing: 16.03.2026
(51) Int. Cl.: B29C 65/02, B29C 65/48, B29C 65/50, B29C 65/74, B65H 21/00, B65B 9/20, B65B 51/10, B65B 61/00, B29L 31/30, B29L 31/00, B65H 19/18

(54) **SPLICING DEVICE FOR A STRIP APPLICATION APPARATUS, STRIP APPLICATION APPARATUS HAVING A SPLICING DEVICE, PACKAGING MACHINE HAVING A STRIP APPLICATION APPARATUS AND METHOD FOR SPLICING A SEALING STRIP**

(30) Priority: 24.03.2025 IT 202500005919
(71) Applicant: Tetra Laval Holdings & Finance S.A., 1009 Pully (CH)
(72) Inventor: CASELLI, Riccardo, 41123 Modena (IT); RICCO', Marco, 41123 Modena (IT); POLETTI, Gabriele, 41123 Modena (IT); DAVOLI, Stefano, 41123 Modena (IT); BORASI, Gabriele, 41123 Modena (IT)
(74) Representative: Tetra Pak Patent Attorneys

(57) **Abstract**

There is described a splicing device (20) for a strip application apparatus (7) configured to splice a new sealing strip (21) onto a sealing strip (8) in use, each one of the new sealing strip (21) and the sealing strip (8) in use being made of a heat-sealable material; the splicing device (20) comprises a sealing unit (22) configured to seal the new sealing strip (21) onto the sealing strip (8) in use; the sealing unit (22) comprises a first sealing group (23) configured to execute a first sealing operation so as to seal a first sealing portion (31) of the sealing strip (8) in use and a second sealing portion (32) of the new sealing strip (21) to one another; a cutting group (27) configured to cut the sealing strip (8) in use after the first sealing operation downstream of the first sealing portion (31) along the strip advancement path (S) thereby obtaining a combined sealing strip (25) comprising protruding portions (28) projecting from the combined sealing strip (25) ; and a second sealing group (29) distinct from the first sealing group (23) and configured to seal the protruding portions (28) onto the combined sealing strip (25) during a second sealing operation.

## Description

### TECHNICAL FIELD

The present invention relates to a splicing device for a strip application apparatus.

Additionally, the present invention relates to a strip application apparatus for applying a sealing strip onto a multilayer packaging material, having a splicing device.

Furthermore, the present invention relates to a packaging machine for packaging a pourable product into packages formed from a multilayer packaging material, having a strip application apparatus.

Additionally, the present invention relates to a method for splicing a sealing strip.

### BACKGROUND ART

As is known, many liquid or pourable food products, such as fruit juice, UHT (ultra-high-temperature treated) milk, wine, tomato sauce, etc., are sold in composite packages at least partially made from a multilayer packaging material.

A typical example is a parallelepiped-shaped composite package for liquid or pourable food products formed from a multilayer packaging material. One example of composite package is known as Tetra Brik Aseptic (registered trademark). Such composite packages are made by sealing and folding the multilayer packaging material. The packaging material has a multilayer structure comprising a base layer, e.g. of paper or cardboard, covered on both sides with layers of heat-seal plastic material, e.g. polyethylene. In the case of aseptic packages for long-storage products, such as UHT milk, the packaging material also comprises a layer of gas and/or water vapor and/or light-barrier material.

The layer of gas and/or water vapor and/or light-barrier material is superimposed on a layer of heat-seal plastic material, and is in turn covered with another layer of heat-seal plastic material forming the inner face of the package eventually contacting the food product.

Composite packages of this sort are normally produced on fully automatic packaging machines, some of which advance and sterilize a web of multilayer packaging material, which is then formed into a tube and filled with the pourable product before the tube is formed into individual sealed composite packages.

The forming of the tube within such packaging machines requires to overlap the opposite longitudinal edges of the web of multilayer packaging material with one another and to longitudinally seal the tube.

Furthermore, prior to the folding and the longitudinal sealing, a sealing strip of heat-seal plastic material is applied and sealed onto one of the longitudinal edges of the web of multilayer packaging material. The web of multilayer packaging material is folded such that the sealing strip is in contact with the inner side of the tube. Thus, the sealing strip gets into contact with the pourable product.

More specifically, the packaging machine comprises a strip application apparatus that applies the sealing strip onto the web of multilayer packaging material. The strip application apparatus is configured to heat seal the sealing strip to an inner layer of the web of multilayer packaging material, the inner layer being defined by one of the layers of the heat-seal plastic material.

The sealing strip that is used is typically unwound from a reel. At some point of the production process, the sealing strip is about to be exhausted. In order to avoid the need of interrupting the production process, the strip application apparatus also comprises a splicing device configured to splice a new sealing strip onto the sealing strip in use.

A typical splicing device comprises a sealing device configured to seal the new sealing strip onto the sealing strip in use and a cutting device for cutting the sealing strip in use after the sealing operation of the sealing device. This leads to the formation of a combined sealing strip having a central portion and two lateral portions protruding from the central portion, in particular one lateral portion protruding from a first side of the central portion and the other lateral portion protruding from a second side of the central portion, opposite to the first side. One lateral portion results from a portion of the sealing strip in use and the other lateral portion results from a portion of the new sealing strip. Additionally, the central portion comprises two layers sealed to one another, one originating from a portion of the sealing strip in use and the other one originating from a portion of the new sealing strip.

Even though the known splicing devices work satisfyingly well, a desire is felt in the sector to further improve such splicing devices and/or methods for splicing a sealing strip, in particular so as to avoid the presence of the protruding lateral portions.

### DISCLOSURE OF INVENTION

It is an object of the present invention to provide an improved splicing device for a strip application apparatus.

It is a further object of the present invention to provide an improved strip application apparatus for applying a sealing strip onto a multilayer packaging material.

It is a further object of the present invention to provide an improved packaging machine for packaging a pourable product into packages formed from a multilayer packaging material.

It is a further object of the present invention to provide an improved method for splicing a sealing strip in use and a new sealing strip with one another.

According to the present invention, there are provided a splicing device and a method according to the respective independent claims.

Further advantageous embodiments are specified in the respective dependent claims.

Additionally, according to the present invention, there is provided a strip application apparatus as claimed in claims 9 or 10.

Furthermore, according to the present invention there is provided a packaging machine as claimed in claim 11.

### BRIEF DESCRIPTION OF THE DRAWINGS

A non-limiting embodiment of the present invention will be described by way of example with reference to the accompanying drawings, in which:
Figure 1 a schematic view of a packaging machine having a strip application apparatus provided with a splicing device according to the present invention, with parts removed for clarity;
Figure 2 is a front view of the splicing device according to the present invention, with parts removed for clarity;
Figure 3 is a perspective view of the splicing device of Figure 2, with parts removed for clarity; and
Figures 4A to 4C are front views, with parts removed for clarity, that illustrate the operation of the splicing device of Figures 2 and 3.

### BEST MODES FOR CARRYING OUT THE INVENTION

Number 1 indicates as a whole a packaging machine for packaging pourable products, in particular pourable food products, such as milk, cream, yoghurt drinks, yoghurt, fruit juice, wine, tomato sauce, sugar, salt, emulsions, solutions containing solid particles (e.g. legumes), etc., into packages 2, in particular composite packages.

Preferentially, packages 2 may be formed from a multilayer packaging material.

The multilayer packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of packages 2 eventually contacting the pourable product packaged within packages 2.

Additionally, the multilayer packaging material may also comprise a layer of gas and/or water vapor and/or light-barrier material, e.g. based on materials such as aluminum, ethylene vinyl alcohol (EVOH), paper materials and treated paper materials such as high-density or grease-proof papers, barrier-coated substrates such as cellulose based and polymeric substrates, metalized substrates such as cellulose-based or polymeric substrates with and without pre-applied barrier coating, barrier-coated polymer films such as olefinic polymer or polyamide films, combinations of these materials, and further materials having similar barrier properties.

In particular, the layer of gas and/or water vapor and/or light-barrier material is arranged between one of the layers of the heat-seal plastic material and the layer of fibrous material.

Preferentially, the multilayer packaging material may also comprise a further layer of heat-seal plastic material being interposed between the layer of gas and/or water vapor and/or light-barrier material and the layer of fibrous material.

Preferentially, the multilayer packaging material may be provided as a web of packaging material 3, in particular containing a plurality of successively aligned repeat units, each repeat unit defining a precursor of one respective package 2.

In further detail, each package 2 may comprise a longitudinal seam portion and a pair of transversal seal portions, in particular a top transversal seal portion and bottom transversal seal portion (i.e. one seal portion at an upper portion of package 2 and another seal portion at a lower portion of package 2).

Each package 2 may comprise an inner face and an inner space containing the pourable product. In particular, the inner face faces the inner space and/or is in contact with the pourable product.

Furthermore, each package 2 may comprise a sealing strip portion sealed and/or heat fused onto the inner face, and in particular extending (substantially) parallel to the respective longitudinal seam portion.

In particular, the sealing strip portion serves to avoid that portions of the layer of fibrous material can get into contact with the pourable product.

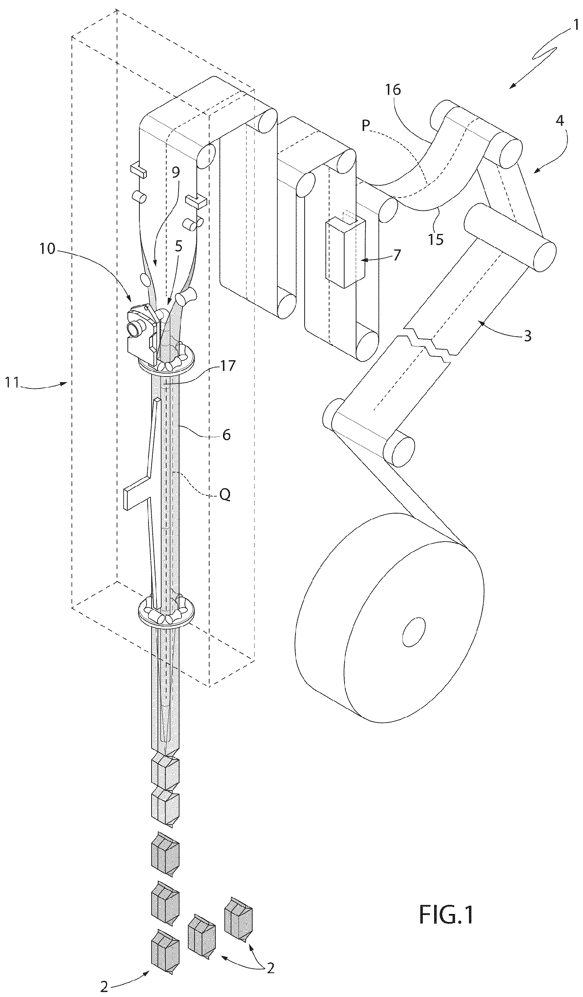

With particular reference to Figure 1, packaging machine 1 may comprise:
- a conveying apparatus 4 for advancing web of packaging material 3 along a web advancement path P to a tube forming station 5, at which, in use, web of packaging material 3 is formed into a tube 6;
- a strip application apparatus 7 for applying a sealing strip 8 in use, the sealing strip 8 in use being made of a heat-sealable material, in particular a heat-sealable plastic material;

- a tube forming and sealing apparatus 9 configured to form tube 6 from the, in use, advancing web of packaging material 3 and longitudinally sealing tube 6;
- a filling device 10 for filling tube 6 with the pourable product; and
- a package forming unit (not shown and known as such) configured to form, transversally seal and cut the, in use, advancing tube 6 for forming packages 2, from the, in use, advancing tube 6.

Preferentially, packaging machine 1 may also comprise an isolation chamber 11 separating an inner environment from an outer environment.

In particular, tube forming and sealing apparatus 9 is configured to form and longitudinally seal tube 6 within isolation chamber 11 (i.e. within the inner environment).

Strip application apparatus 7 may be arranged upstream of tube forming and sealing apparatus 9 along advancement path P.

Preferentially, packaging machine 1 may also comprise a sterilizing unit (not shown and known as such) configured to sterilize the, in use, advancing web of packaging material 3.

Preferentially, conveying apparatus 4 may also be configured to advance tube 6 and any intermediate of tube 6 in a manner known as such along a tube advancement path Q, in particular from tube forming station 5 to and at least partially through the package forming unit.

In particular, with the wording intermediates of tube 6 any configuration of web of packaging material 3 is meant prior to obtaining the tube structure and after the beginning of the folding operation of web of packaging material 3 by tube forming and sealing apparatus 9. In other words, the intermediates of tube 6 are a result of a gradual folding of web of packaging material 3 so as to obtain tube 6.

Preferentially, web of packaging material 3 may comprise a first longitudinal edge 15 and a second longitudinal edge 16 spaced apart from first longitudinal edge 15. In particular, first longitudinal edge 15 and second longitudinal edge 16 may be spaced apart along a transversal axis of web of packaging material 3.

Furthermore, tube forming and sealing apparatus 9 may be configured to overlap first longitudinal edge 15 and second longitudinal edge 16 with one another. As will be described in more detail further below, overlapping of first longitudinal edge 15 and second longitudinal edge 16 occurs with sealing strip 8 in use having been sealed and/or heat fused to first longitudinal edge 15.

It should be noted that the lateral portion of each of first longitudinal edge 15 and second longitudinal edge 16 is free of any heat-sealable material, in particular heat-sealable plastic material. Hence, once the respective package 1 is formed and filled, the fibers of the layer of fibrous material would get into contact with the pourable product if no further measures were foreseen. Therefore, first longitudinal edge 15, which after formation of the respective package 1 is arranged within the respective package 2, receives sealing strip 8 in use such that the respective lateral portion is covered and no direct contact between the fibers of the layer of fibrous material and the pourable product occurs.

With particular reference to Figure 1, filling device 10 may comprise a filling pipe 17 being in fluid connection with a pourable product storage tank (not shown) for storing/providing the pourable product to be packaged. Filling pipe 17 may, in use, be at least partially arranged within tube 6 and may be configured to direct, in use, the pourable product into tube 6.

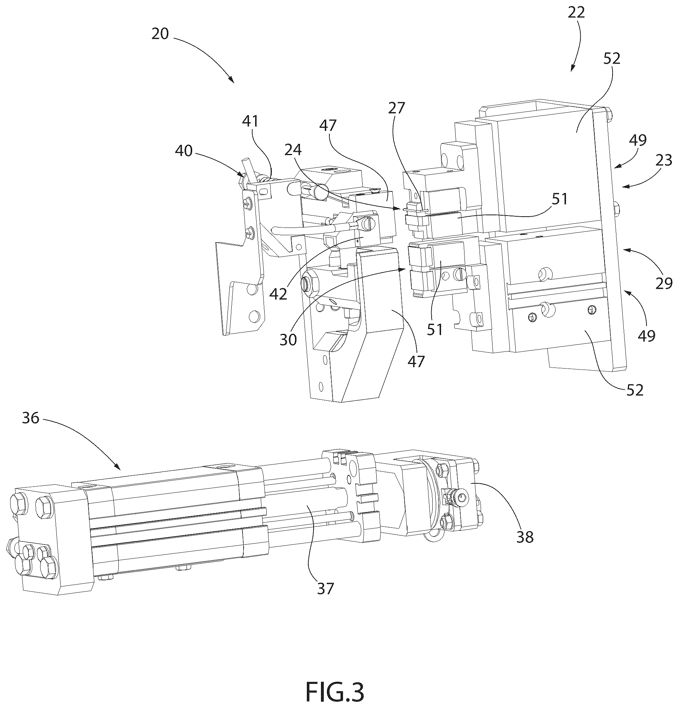

With particular reference to Figure 3, strip application apparatus 7 may comprise:
- an advancement device 18 configured to advance sealing strip 8 in use along a strip advancement path S and towards and onto web of packaging material 3, in particular first longitudinal edge 15; and
- an application device configured to apply (heated) sealing strip 8 in use onto (heated) web of packaging material 3, in particular first longitudinal edge 15.

Preferably, strip application apparatus 7 may also comprise an alignment device configured to vary the position and/or alignment of sealing strip 8 in use with respect to web of packaging material 3, in particular first longitudinal edge 15. In other words, the alignment device is configured to position and/or align sealing strip 8 in use with respect to web of packaging material 3, in particular first longitudinal edge 15.

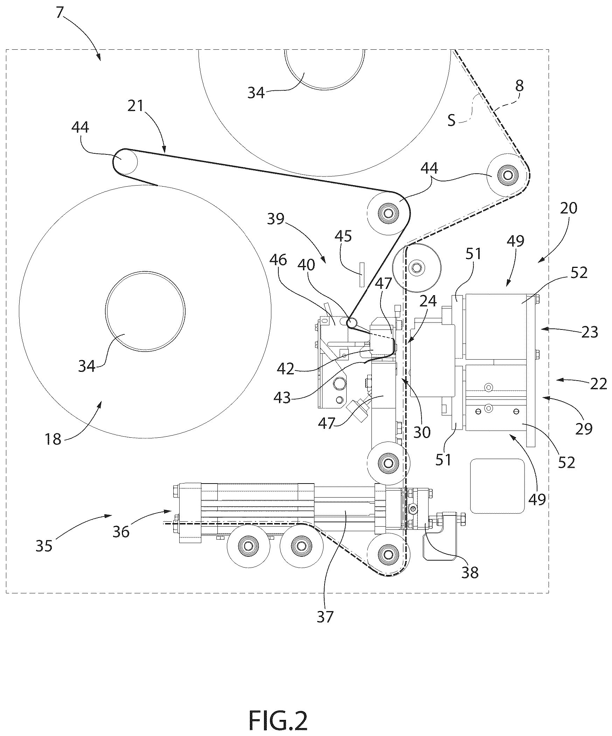

With particular reference to Figures 2 to 4C, strip application apparatus 7 also comprises a splicing device 20 configured to splice a new sealing strip 21 of heat-sealable material, in particular heat-sealable plastic material, to sealing strip 8 in use.

By providing splicing device 20 one avoids interruption of the production process. In particular, splicing device 20 allows to provide a substantially endless sealing strip.

Additionally, after splicing of new sealing strip 21 to sealing strip 8 in use, the new sealing strip 21 becomes the sealing strip 8 in use.

In more detail and with reference to Figures 2 to 4C, splicing device 20 comprises a sealing unit 22 configured to seal new sealing strip 21 onto sealing strip 8 in use.

More specifically, sealing unit 22 comprises a first sealing group 23 configured to execute, in particular at a first sealing station 24, a first sealing operation so as to seal new sealing strip 21 onto sealing strip 8 in use.

Additionally, sealing group 23 comprises a cutting group 27 configured to cut sealing strip 8 in use, after the first sealing operation.

It is thus obtained a combined sealing strip 25 that comprises parts of new sealing strip 21 and parts of sealing strip 8 in use.

In more detail, sealing strip 8 in use comprises a first sealing portion 31 and new sealing strip 21 comprises a second sealing portion 32.

During execution of the first sealing operation, first sealing portion 31 and second sealing portion 32 are sealed to one another.

Hence, in use, after the first sealing operation, first sealing portion 31 and second sealing portion 32 are attached, in particular fused, to one another.

In particular, cutting group 27 is configured to cut sealing strip 8 in use downstream of first sealing portion 31 along strip advancement path S.

Combined sealing strip 25 comprises a main portion 26, in particular resulting from the sealing of first sealing portion 31 and second sealing portion 32 to one another.

Combined sealing strip 25 also comprises an upstream portion 60 (with respect to strip advancement path S) formed from sealing strip 8 in use and a downstream portion 61 (with respect to strip advancement path S) formed from new sealing strip 21.

Moreover, main portion 26 of combined sealing strip 25 is interposed between upstream portion 60 and downstream portion 61.

In further detail, main portion 26 has a first layer originating from first sealing portion 31 of sealing strip 8 in use and a second layer originating from second sealing portion 32 of new sealing strip 21. As first sealing portion 31 and second sealing portion 32 are sealed to each other, also the first layer and the second layer are sealed to each other

Additionally, combined sealing strip 25 comprises two protruding portions 28 projecting from main portion 26.

In particular, one protruding portion 28 results from a portion, in particular a trailing portion, of sealing strip 8 in use (after the cutting of sealing strip 8 in use) and the other protruding portion 28 results from a portion, in particular a leading portion, of new sealing strip 21.

Advantageously, sealing unit 22 also comprises a second sealing group 29, in particular arranged at a second sealing station 30, distinct from first sealing group 23 and configured to seal protruding portions 28 onto combined sealing strip 25 during a second sealing operation.

Hence, by having second sealing group 29 it is possible to avoid that protruding portions 28 project from combined sealing strip 25 as protruding portion 28 are sealed onto the other portions of combined sealing strip 25. In particular, protruding portion 28 originating from sealing strip 8 in use is sealed onto the portion of combined sealing strip 25 generated by new sealing strip 21 and protruding portion 28 originating from new sealing strip 21 is sealed onto the portion of combined sealing strip 25 generated by sealing strip 8 in use.

In particular, protruding portions 28 originating from new sealing strip 21 is sealed onto upstream portion 60 and protruding portion 28 originating from sealing strip 8 in use is sealed onto downstream sealing portion 61.

In particular, second sealing station 30 is arranged downstream of first sealing station 24 along strip advancement path S.

Splicing device 20 further comprises a conveying unit 35 configured to advance combined sealing strip 25 along strip advancement path S so as to position main portion 26 and protruding portions 28 at second sealing station 30 after the first sealing operation and prior to the second sealing operation.

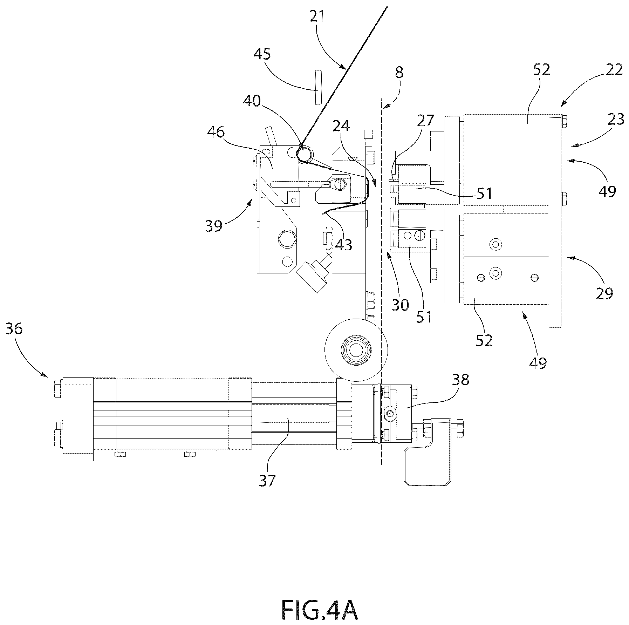

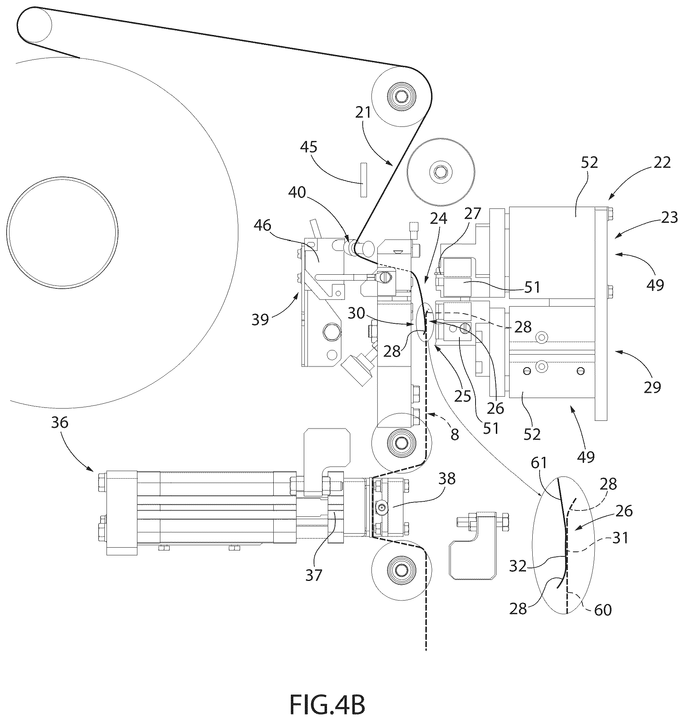

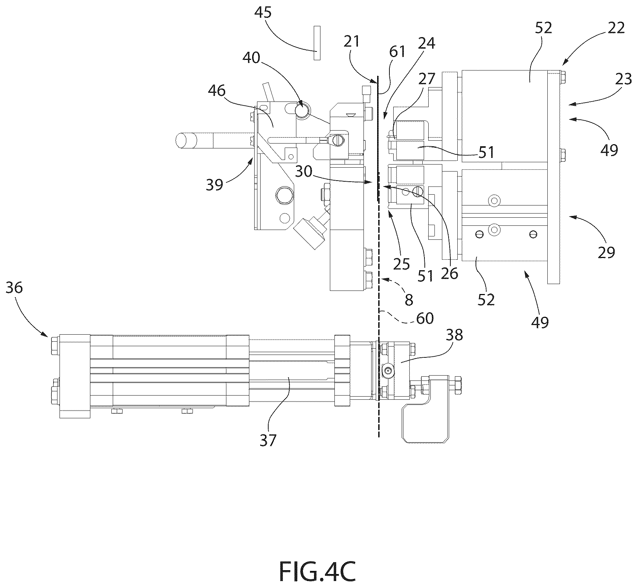

In more detail, conveying unit 35 comprises a clamping and positioning device 36 configured to clamp a clamping portion of combined sealing strip 25, in particular the part of combined sealing strip 25 generated by sealing strip 8 in use, and to move the clamping portion of combined sealing strip 25 from a first position (see Figures 2 and 4A) to a second position (see Figure 4B), after the first sealing operation and prior to the second sealing operation so as to position main portion 26 and protruding portions 28 at second sealing station 30.

In more detail, clamping and positioning device 36 comprises a linearly movable piston 37 and a clamping group 38 attached to piston 37 and configured to clamp the clamping portion of combined sealing strip 25.

Piston 37 is movable between an extracted position and a retracted position for moving the clamping portion of combined sealing strip 25 between the first position and the second position.

Advantageously, piston 37 is in the extracted position and the retracted position for positioning the clamping portion of combined sealing strip 25 in, respectively, the first position and the second position.

In particular, clamping and positioning device 36 is arranged downstream of second sealing station 30 along strip advancement path S.

With particular reference to Figures 2 to 4, splicing device 20 also comprises a sensor device 39 configured to check that a tension of new sealing strip 21 corresponds to a desired tension.

In more detail, splicing device 20 comprises an interaction element 40 having an elastic portion 41, in particular the elastic portion 41 being configured as a spring.

When preparing for a splicing operation, new sealing strip 21 is guided around and deviated by elastic portion 41.

In particular, interaction element 40 is configured to contribute to the definition of the desired tension of new sealing strip 21.

Additionally, interaction element 40 is configured to contribute to the correct positioning of main portion 26 and protruding portions 28 at second sealing station 30 after the first sealing operation and before the second sealing operation.

In further detail, sealing strip 8 in use and new sealing strip 21 are each wound about a respective reel 34.

Preferentially, advancement device 18 comprises two actuation groups, each configured to receive and retain one respective reel 34 at a time and to actuate an angular movement of the respective reel 34.

Additionally, one actuation group retains, in use, the respective reel 34 having sealing strip 8 in use and the other actuation group retains, in use, the respective reel 34 having new sealing strip 21.

Moreover, splicing device 20 comprises a clamping assembly 42 configured to clamp a leading portion 43 of new sealing strip 21 prior to the splicing operation. In particular, prior to the splicing operation, new sealing strip 21 extends from the respective reel 34 to clamping assembly 42 and follows a defined path thanks to one or more deviation rollers 44 of advancing device 18.

Control of the tension of new sealing strip 21 is possible thanks to the actuation group being configured to position the respective reel 34 having new sealing strip 21 in a defined angular position.

Additionally, the desired tension is obtained when interaction element 40 is in a desired position.

Sensor device 39 comprises a sensor 45 configured to determine whether interaction element 40 is arranged in the desired position.

Additionally, sensor device 39 also comprises an auxiliary sensor 46 configured to determine a first position of interaction element 40.

The actuation group retaining reel 34 having new sealing strip 21 is configured to:
- at first position the respective reel 34 in a first angular position until auxiliary sensor 46 detects the presence of interaction element 40; and
- secondly to position the respective reel 34 in a second angular position so that sensor 45 detects the presence of interaction element 40.

In particular, when auxiliary sensor 46 detects the presence of interaction element 40, interaction element 40 is arranged in the first position and, afterwards, when sensor 45 detects the presence of interaction element 40, interaction element 40 has reached the desired position (i.e. interaction element 40 is in the desired position).

Then, in use, it is guaranteed that new sealing strip 21 has the desired tension.

In addition, it is also guaranteed that combined sealing strip 25 is, in particular main portion 26 and protruding portions 28 are, correctly arranged at second sealing station 30, since the desired position of interaction element 40 defines a reference position based on which clamping and positioning device 36 controls the movement of combined sealing strip 25, in particular main portion 26 and protruding portions 28. In other words, clamping and positioning device 36 pulls combined sealing strip 25 along strip advancement path S for a certain stroke, the length of such stroke being determined by interaction element 40 being arranged in the desired position.

In more detail, sensor 45 is interposed between auxiliary sensor 46 and clamping assembly 42 (when considering a projection of sensor 45, auxiliary sensor 46 and clamping assembly 42 on a substantially horizontal line) .

With particular reference to Figures 2 to 4C, each one of first sealing group 23 and second sealing group 29 comprises a passive element 47 having a first abutment surface and an active device 49 having a second abutment surface.

Moreover, each active device 49 and the respective passive element 47 are controllable in an idle configuration and an active configuration in which the respective first abutment surface and the respective second abutment surface are, respectively, withdrawn from one another and approached to one another.

Additionally, each passive element 47 and the respective active device 49 are configured such to clamp respective portions of new sealing strip 21 and sealing strip 8 in use between the respective the first abutment surface and the respective second abutment surface with the respective passive element 47 and the respective active device 49 being in the active configuration.

Each active device 49 comprises a generator unit 51, in particular having the respective second abutment surface, configured to provide the energy for inducing sealing of the heat-sealable material, in particular with the respective active device 49 and the respective passive element 47 being in the active configuration.

According to the embodiment shown, each passive element 47 is fixed in space.

Additionally, each active device 49 comprises an actuator 52 configured to selectively move the respective generator unit 51 towards and away from the respective passive element 47.

More specifically, movement of generator unit 51 towards and away from the respective passive element 47 allows to control the active device 49 and the respective passive element 47 in the respective active configuration and the respective idle configuration, respectively.

Advantageously, splicing device 20 also comprises elongated elements, such as pins, bars or the like, arranged such that portions of combined sealing strip 25 abut against the elongated elements so as to guarantee that combined sealing strip 25 detaches from the second abutment surfaces during control of the respective passive element 47 and the respective active device 49 from the active configuration to the idle configuration.

In particular, the elongated elements are arranged such to define an imaginary line interposed between each first abutment surface and the respective second abutment surfaces with the passive elements 47 and the respective active devices 49 being in the respective idle configurations.

In addition, or alternatively, at least active device 49 of second sealing group 29, preferentially each active device 49, may comprise a blowing group configured to create a flow of gas, such as a flow of air, along a direction opposite to a movement direction of the respective generator unit 51 when withdrawing generator unit 51 from the respective passive element 47.

In use, packaging machine 1 packages the pourable product into packages 2.

In more detail, operation of packaging machine 1 may comprise the steps of:
- conveying, in particular by conveying apparatus 4, during which web of packaging material 3 advances along path P;
- applying, during which sealing strip 8 in use is applied onto web of packaging material 3, in particular onto first longitudinal edge 15;
- forming and sealing, during which web of packaging material 3 is formed into tube 6 and tube 6 is longitudinally sealed;
- advancing, during which tube 6 is advanced along path Q;
- filling, during which the pourable product is filled into tube 6; and
- forming, during which packages 2 are formed from tube 6, in particular by shaping tube 6 and transversally sealing and cutting tube 6.

Additionally, also a method for splicing is executed, in particular when sealing strip 8 in use, is about to get exhausted.

In particular, the method for splicing is executed by means of splicing device 20.

The method for splicing comprises:
- a first step of sealing, in particular executed by means of first sealing group 23, during which new sealing strip 21 is sealed onto sealing strip 8 in use;
- a step of cutting, in particular executed by means of cutting group 27, during which sealing strip 8 in use is cut; after the first step of sealing and the step of cutting combined sealing strip 25 is obtained; and
- a second step of sealing, in particular executed by means of second sealing group 29, during which protruding portions 28 projecting from combined sealing strip 25, in particular main portion 26, are sealed onto combined sealing strip 25, in particular onto the portion of combined sealing strip 25 generated by sealing strip 8 in use and the portion of combined sealing strip 25 generated by new sealing strip 21, more in particular onto upstream portion 60 and downstream portion 61.

Advantageously, the step of cutting is executed after the first step of sealing and the second step of sealing is executed after the step of cutting.

In more detail, during each one of the first step of sealing and the second step of sealing, the respective passive element 47 and the respective active device 49 are controlled from the respective idle configuration to the respective active configuration and after execution of the respective sealing operation (in particular by means of the respective generator unit 51) the respective passive element 47 and the respective active device 49 are controlled from the respective active configuration back to the respective idle configuration.

In more detail, each passive element 47 and the respective active device 49 are controlled from the respective idle configuration to the respective active configuration by moving the respective generator unit 51 towards the respective passive element 47 and from the respective active configuration to the respective idle configuration by moving the respective generator unit 51 away from the respective passive element 47.

Moreover, the method for splicing further comprises a step of conveying, in particular executed by conveying unit 35, during which combined sealing strip 25 is advanced along strip advancement path S so as to position main portion 26 and protruding portions 28 at second sealing station 30 after the first step of sealing and prior to the second step of sealing.

In particular, during the step of conveying, clamping and positioning device 36 moves the clamping portion of combined sealing strip 25 from the first position to the second position. This movement leads to the movement of main portion 26 and protruding portions 28 from first sealing station 24 to second sealing station 30.

Additionally, a step of preparing is executed, during which new sealing strip 21 is prepared, in particular so that new sealing strip 21 has a desired tension and a reference position of new sealing strip 21 is defined.

During the step of preparing, new sealing strip 21 is guided from the respective reel 34 to clamping assembly 42 which clamps leading portion 43 of wen sealing strip 21. Additionally, new sealing strip 21 engages interaction element 40 such that interaction element 40 deviates new sealing strip 21.

Afterwards, reel 34 is angularly positioned such that at first auxiliary sensor 46 detects the presence of interaction element 40 being in the first position and afterwards reel 34 is angularly positioned such that sensor 45 detects the presence of interaction element 40 being in the desired position.

By having interaction element 40 being in the desired position, one also guarantees that during the step of conveying, main portion 26 and protruding portions 28 are correctly positioned at second sealing station 30.

It should be noted that after completion of the splicing operation, it is sufficient to increase the tension of combined sealing strip 25 so that new sealing strip 21 disengages from interaction element 40. This is due, in particular, to elastic portion 41.

The advantages of splicing device 20 and/or the method for splicing according to the present invention will be clear from the foregoing description.

In particular, protruding portions 28 are attached to combined sealing strip 25, and therefore to the inner wall of package 2 once package 2 has been formed from web of packaging material 3, and do not project from main portion 26.

Additionally, clamping and positioning device 36, in particular also in collaboration with interaction element 40, allows to precisely and easily align main portion 26 and protruding portions 28 at second sealing station 30.

Moreover, interaction element 40 contributes to the definition of the desired tension of new sealing strip 21.

Clearly, changes may be made to splicing device 20 and/or the method for splicing and/or strip application apparatus 7 and/or packaging machine 1 as described herein without, however, departing from the scope of protection as defined in the accompanying claims.

## Claims

1. Splicing device (20) for a strip application apparatus (7) configured to splice a new sealing strip (21) onto a sealing strip (8) in use, each one of the new sealing strip (21) and the sealing strip (8) in use being made of a heat-sealable material;
the splicing device (20) comprises a sealing unit (22) configured to seal the new sealing strip (21) onto the sealing strip (8) in use;
wherein the sealing unit (22) comprises:
- a first sealing group (23) configured to execute a first sealing operation so as to seal a first sealing portion (31) of the sealing strip (8) in use and a second sealing portion (32) of the new sealing strip (21) to one another;
- a cutting group (27) configured to cut the sealing strip (8) in use after the first sealing operation downstream of the first sealing portion (31) along the strip advancement path (S) thereby obtaining a combined sealing strip (25) comprising protruding portions (28) projecting from the combined sealing strip (25); and
- a second sealing group (29) distinct from the first sealing group (23) and configured to seal the protruding portions (28) onto the combined sealing strip (25) during a second sealing operation.

2. Splicing device according to claim 1, wherein the first sealing group (23) is configured to execute the first sealing operation at a first sealing station (24) and the second sealing group (29) is configured to execute the second sealing operation at a second sealing station (30) arranged downstream of the first sealing station (24) along a strip advancement path (S);
wherein the combined sealing strip (25) comprises a main portion (26) formed by the first sealing portion (31) of the sealing strip (8) in use and the second sealing portion (32) of the new sealing strip (21) sealed to one another;
wherein the protruding portions (28) project from the main portion (26);
wherein the splicing device (20) further comprises a conveying unit (35) configured to advance the combined sealing strip (25) along the strip advancement path (S) so as to position the main portion (26) and the protruding portions (28) at the second sealing station (30) after the first sealing operation and prior to the second sealing operation.

3. Splicing device according to claim 2, wherein the conveying unit (35) comprises a clamping and positioning device (36) configured to clamp a clamping portion of the combined sealing strip (25) and to move the clamping portion of the combined sealing strip (25) from a first position to a second position after the first sealing operation and prior to the second sealing operation so as to position the main portion (26) and the protruding portions (28) at the second sealing station (30).

4. Splicing device according to claim 3, wherein the clamping and positioning device (36) comprises a linearly movable piston (37) and a clamping group (38) attached to the piston (37) and configured to clamp the clamping portion of the combined sealing strip (25);
wherein the piston (37) is movable between an extracted position and a retracted position for moving the clamping portion of the combined sealing strip (25) from the first position to the second position.

5. Splicing device according to claim 4, wherein the piston (37) is in the extracted position and the retracted position for positioning the clamping portion of the combined sealing strip (25) in, respectively, the first position and the second position.

6. Splicing device according to any one of claims 3 to 5, and further comprising a sensor device (39) provided with an interaction element (40) and a sensor (45) configured to determine whether the interaction element (40) is arranged in a reference position, the clamping and positioning device (36) being arranged to control the movement of the combined sealing strip (25) based on the reference position.

7. Splicing device according to any one of the preceding claims, wherein each one of the first sealing group (23) and the second sealing group (29) comprises a passive element (47) having a first abutment surface and an active device (49) having a second abutment surface;
wherein each active device (49) and the respective passive element (47) are controllable in an idle configuration and an active configuration in which the respective first abutment surface and the respective second abutment surface are, respectively, withdrawn from one another and approached to one another;
wherein each passive element (47) and each active element (49) are configured such to clamp respective portions of the new sealing strip (21) and the sealing strip (8) in use between the respective first abutment surface and the respective second abutment surface with the respective passive element (47) and the respective active device (49) being in the respective active configuration;
wherein each active device (49) comprises a generator unit (51) having the second abutment surface and being configured to provide the energy for inducing a sealing of the heat-sealable material.

8. Splicing device according to claim 7, and further comprising elongated elements arranged such that portions of the combined sealing strip (25) abut, in use, against the elongated elements so as to guarantee that the combined sealing strip (25) detaches from the second abutment surface of the active device (49) of the second sealing group (29) during control of the respective passive element (47) and the respective active device (49) from the active configuration to the idle configuration.

9. Strip application apparatus (7) for applying a sealing strip (8) in use onto a web of a multilayer packaging material (3) comprising at least a splicing device (20) according to any one of the preceding claims configured to splice a new sealing strip (21) onto the sealing strip (8) in use.

10. Strip application apparatus according to claim 9, and further comprising:
- an advancement device configured to advance the sealing strip (8) in use along a strip advancement path (S) and towards and onto the web of multilayer packaging material (3); and
- an application device configured to seal the sealing strip (8) in use onto the web of multilayer packaging material (3).

11. Packaging machine (1) for packaging a pourable product into packages (2) comprising at least one strip application apparatus (12) according to claim 9 or 10.

12. Method for splicing a new sealing strip (21) onto a sealing strip (8) in use, each one of the new sealing strip (21) and the sealing strip (8) in use being made of a heat-sealable material;
the method comprises:
- a first step of sealing, during which a first sealing portion (31) of the sealing strip (8) in use and a second sealing portion (32) of the new sealing strip (21) are sealed to one another;
- a step of cutting executed after the first step of sealing, during which the sealing strip (8) in use is cut downstream from the first sealing portion (31) along a strip advancement path (S) thereby obtaining a combined sealing strip (25) comprising protruding portions (28) projecting from the combined sealing strip (25); and
- a second step of sealing executed after the step of cutting, during which the protruding portions (28) are sealed onto the combined sealing strip (25).

13. Method according to claim 12, wherein the first step of sealing is executed at a first sealing station (24) and the second step of sealing is executed at a second sealing station (30) arranged downstream of the first sealing station (24) along a strip advancement path (S);
wherein the combined sealing strip (25) comprises a main portion (26) formed by the first sealing portion (31) of the sealing strip (8) in use and the second sealing portion (32) of the new sealing strip (21) sealed to one another;
wherein the protruding portions (28) project from the main portion (26);
wherein the method further comprises a step of conveying during which the combined sealing strip (25) is advanced along the strip advancement path (S) so as to position the main portion (26) and the protruding portions (28) at the second sealing station (30) after the first step of sealing and prior to the second step of sealing.

## Amended claims

### Amended claims in accordance with Rule 137(2) EPC.

1. Splicing device (20) for a strip application apparatus (7) configured to splice a new sealing strip (21) onto a sealing strip (8) in use, each one of the new sealing strip (21) and the sealing strip (8) in use being made of a heat-sealable material;
the splicing device (20) comprises a sealing unit (22) configured to seal the new sealing strip (21) onto the sealing strip (8) in use;
wherein the sealing unit (22) comprises:
- a first sealing group (23) configured to execute a first sealing operation so as to seal a first sealing portion (31) of the sealing strip (8) in use and a second sealing portion (32) of the new sealing strip (21) to one another;
- a cutting group (27) configured to cut the sealing strip (8) in use after the first sealing operation downstream of the first sealing portion (31) along the strip advancement path (S) thereby obtaining a combined sealing strip (25) comprising protruding portions (28) projecting from the combined sealing strip (25);
**characterized in that** the sealing unit (22) comprises a second sealing group (29) distinct from the first sealing group (23) and configured to seal the protruding portions (28) onto the combined sealing strip (25) during a second sealing operation.

2. Splicing device according to claim 1, wherein the first sealing group (23) is configured to execute the first sealing operation at a first sealing station (24) and the second sealing group (29) is configured to execute the second sealing operation at a second sealing station (30) arranged downstream of the first sealing station (24) along a strip advancement path (S);
wherein the combined sealing strip (25) comprises a main portion (26) formed by the first sealing portion (31) of the sealing strip (8) in use and the second sealing portion (32) of the new sealing strip (21) sealed to one another;
wherein the protruding portions (28) project from the main portion (26);
wherein the splicing device (20) further comprises a conveying unit (35) configured to advance the combined sealing strip (25) along the strip advancement path (S) so as to position the main portion (26) and the protruding portions (28) at the second sealing station (30) after the first sealing operation and prior to the second sealing operation.

3. Splicing device according to claim 2, wherein the conveying unit (35) comprises a clamping and positioning device (36) configured to clamp a clamping portion of the combined sealing strip (25) and to move the clamping portion of the combined sealing strip (25) from a first position to a second position after the first sealing operation and prior to the second sealing operation so as to position the main portion (26) and the protruding portions (28) at the second sealing station (30).

4. Splicing device according to claim 3, wherein the clamping and positioning device (36) comprises a linearly movable piston (37) and a clamping group (38) attached to the piston (37) and configured to clamp the clamping portion of the combined sealing strip (25);
wherein the piston (37) is movable between an extracted position and a retracted position for moving the clamping portion of the combined sealing strip (25) from the first position to the second position.

5. Splicing device according to claim 4, wherein the piston (37) is in the extracted position and the retracted position for positioning the clamping portion of the combined sealing strip (25) in, respectively, the first position and the second position.

6. Splicing device according to any one of claims 3 to 5, and further comprising a sensor device (39) provided with an interaction element (40) and a sensor (45) configured to determine whether the interaction element (40) is arranged in a reference position, the clamping and positioning device (36) being arranged to control the movement of the combined sealing strip (25) based on the reference position.

7. Splicing device according to any one of the preceding claims, wherein each one of the first sealing group (23) and the second sealing group (29) comprises a passive element (47) having a first abutment surface and an active device (49) having a second abutment surface;
wherein each active device (49) and the respective passive element (47) are controllable in an idle configuration and an active configuration in which the respective first abutment surface and the respective second abutment surface are, respectively, withdrawn from one another and approached to one another;
wherein each passive element (47) and each active element (49) are configured such to clamp respective portions of the new sealing strip (21) and the sealing strip (8) in use between the respective first abutment surface and the respective second abutment surface with the respective passive element (47) and the respective active device (49) being in the respective active configuration;
wherein each active device (49) comprises a generator unit (51) having the second abutment surface and being configured to provide the energy for inducing a sealing of the heat-sealable material.

8. Splicing device according to claim 7, and further comprising elongated elements arranged such that portions of the combined sealing strip (25) abut, in use, against the elongated elements so as to guarantee that the combined sealing strip (25) detaches from the second abutment surface of the active device (49) of the second sealing group (29) during control of the respective passive element (47) and the respective active device (49) from the active configuration to the idle configuration.

9. Strip application apparatus (7) for applying a sealing strip (8) in use onto a web of a multilayer packaging material (3) comprising at least a splicing device (20) according to any one of the preceding claims configured to splice a new sealing strip (21) onto the sealing strip (8) in use.

10. Strip application apparatus according to claim 9, and further comprising:
- an advancement device configured to advance the sealing strip (8) in use along a strip advancement path (S) and towards and onto the web of multilayer packaging material (3); and
- an application device configured to seal the sealing strip (8) in use onto the web of multilayer packaging material (3).

11. Packaging machine (1) for packaging a pourable product into packages (2) comprising at least one strip application apparatus (12) according to claim 9 or 10.

12. Method for splicing a new sealing strip (21) onto a sealing strip (8) in use, each one of the new sealing strip (21) and the sealing strip (8) in use being made of a heat-sealable material;
the method comprises:
- a first step of sealing, during which a first sealing portion (31) of the sealing strip (8) in use and a second sealing portion (32) of the new sealing strip (21) are sealed to one another;
- a step of cutting executed after the first step of sealing, during which the sealing strip (8) in use is cut downstream from the first sealing portion (31) along a strip advancement path (S) thereby obtaining a combined sealing strip (25) comprising protruding portions (28) projecting from the combined sealing strip (25);
**characterized by** comprising a second step of sealing executed after the step of cutting, during which the protruding portions (28) are sealed onto the combined sealing strip (25).

13. Method according to claim 12, wherein the first step of sealing is executed at a first sealing station (24) and the second step of sealing is executed at a second sealing station (30) arranged downstream of the first sealing station (24) along a strip advancement path (S);
wherein the combined sealing strip (25) comprises a main portion (26) formed by the first sealing portion (31) of the sealing strip (8) in use and the second sealing portion (32) of the new sealing strip (21) sealed to one another;
wherein the protruding portions (28) project from the main portion (26);
wherein the method further comprises a step of conveying during which the combined sealing strip (25) is advanced along the strip advancement path (S) so as to position the main portion (26) and the protruding portions (28) at the second sealing station (30) after the first step of sealing and prior to the second step of sealing.
